# EUROPEAN PATENT APPLICATION

(11) **EP 4 624 192 A1**
(43) Date of publication of application: **01.10.2025**
(21) Application number: 24176706.0
(22) Date of filing: 17.05.2024
(51) Int. Cl.: B60B 33/00, B60G 21/05

(54) **SYNCHRONOUS UNIVERSAL WHEEL MECHNISM AND INSTALLATION STRUCTURE THEREOF**

(30) Priority: 28.03.2024 CN 202420621435 U
(71) Applicant: Zhejiang EP Equipment Co., Ltd., Zhejiang (CN)
(72) Inventor: Wang, Hao, Zhejiang (CN); Li, Xin, Zhejiang (CN); Guo, Yong, Zhejiang (CN); Liu, Xinyu, Zhejiang (CN)
(74) Representative: Vossius & Partner Patentanwälte Rechtsanwälte mbB

(57) **Abstract**

A synchronous universal wheel mechanism is provided. The synchronous universal wheel mechanism includes a pair of symmetrically arranged wheel seats and a synchronous rod connecting the pair of wheel seats. The synchronous rod and the wheel seats are of a rigid integrated structure. A universal wheel is installed at the bottom of the wheel seat. An installation space for installing a driving wheel installation seat is formed between the wheel seats. The synchronous rod and a rear side fixed block are located on the rear side of the installation space. The synchronous rod is installed on the rear side fixed block and can rotate up and down relative to the rear side fixed block. Installation holes for fixing the driving wheel installation seat or a frame are formed in the rear side fixed block. The synchronous universal wheel mechanism also includes a pressure spring. The pressure spring is located on an up-and-down rotation path of the wheel seat after the wheel seat is installed in place. The expansion axis of the pressure spring is perpendicular to the rotation axis of the synchronous rod. An installation structure of the synchronous universal wheel mechanism is also provided. The structure has the beneficial effects of compact structure and convenient installation.

## Description

### TECHNICAL FIELD

The present disclosure relates to the technical field of transportation vehicles, in particular to a synchronous universal wheel mechanism on a transportation vehicle and an installation structure of the synchronous universal wheel mechanism.

### BACKGROUND

The Chinese utility model patent with the publication number of CN205131373U discloses a synchronous universal wheel mechanism. The synchronous universal wheel mechanism includes an installation seat and wheel seats arranged in pairs. The wheel seats are fixed on the installation seat. A universal wheel is installed at the bottom of the wheel seat. The synchronous universal wheel mechanism also includes a synchronous rod, and both ends of the synchronous rod are respectively fixed on the wheel seats arranged in correspondence with each other. The wheel seat is provided with a wheel load adjusting device. The wheel load adjusting device includes a longitudinally arranged hollow threaded shaft arranged on the installation seat. A screw penetrating through the hollow threaded shaft is arranged in the hollow threaded shaft. A buffer sleeve sleeves the screw and is located below the hollow threaded shaft. The screw passes through the hollow threaded shaft and the buffer sleeve successively, and the end of the screw is fixed on the wheel seat through a nut. The buffer sleeve is made of elastic materials. During the process of applying force to the hollow threaded shaft by the screw and applying force to the buffer sleeve by the hollow threaded shaft, the buffer sleeve can be elastically deformed, so that the height of the whole wheel load adjusting device is lowered, and then the height of the whole wheel seat is lowered. Therefore, the pressure between the universal wheel and the ground is increased to increase the load of the universal wheel, so that the universal wheel can share the load with the driving wheel of a vehicle body.

The transportation vehicle works in the application scenarios with frequent vibration and is large in bearing range. Under frequent vibration, the quick response, quick rebound and large-scale expansion of the buffer structure are needed. According to the disclosed synchronous universal wheel mechanism, a floating self-adjustment function of the universal wheel can be realized through the buffer sleeve, but the mechanism is used for stacking vehicles. The buffer sleeve serves as the buffer material for buffering the universal wheel, but the buffer pad made of polyurethane material cannot realize rapid rebound and large-scale compression and is not suitable for the application scenarios of transportation vehicles.

In addition, according to the synchronous universal wheel mechanism, the wheel seat is fixed on the installation seat. Thus, when the whole vehicle is installed, the shell of the vehicle needs to be installed after the installation seat and the frame are fixed, and the synchronous universal wheel mechanism needs to be disassembled as a whole after the shell is disassembled during disassembly and maintenance. The assembly and disassembly structure is complicated.

### SUMMARY

In order to solve the above problem, the present disclosure aims to provide a synchronous universal wheel mechanism and an installation structure thereof.

A synchronous universal wheel mechanism includes a pair of symmetrically arranged wheel seats and a synchronous rod connected with the pair of wheel seats. The synchronous rod and the wheel seats are of a rigid integrated structure. A universal wheel is installed at the bottom of the wheel seat. An installation space for installing a driving wheel installation seat is formed between the wheel seats. The synchronous rod and a rear side fixed block are located on the rear side of the installation space. The synchronous rod is installed on the rear side fixed block and can rotate up and down relative to the rear side fixed block. Installation holes for fixing the driving wheel installation seat or a frame are formed in the rear side fixed block. The synchronous universal wheel mechanism also includes a pressure spring. The pressure spring is located on an up-and-down rotation path of the wheel seat after the wheel seat is installed in place, and the expansion axis of the pressure spring is perpendicular to the rotation axis of the synchronous rod.

The synchronous universal wheel mechanism includes a pressure spring installation plate. The pressure spring installation pate is fixed on the driving wheel installation seat. The pressure spring installation plate provides an upper limit for the pressure spring, and the wheel seat provides a lower limit for the pressure spring.

Preferably, the pressure spring installation plate includes a fixed seat, the pressure spring provides an upper limit through the fixed seat, and the fixed seat is fixed with an adjusting screw rod and is driven to be adjusted up and down through the adjusting screw rod.

Preferably, left and right ends of the synchronous rod are connecting ends of the synchronous rod, the synchronous rod is hinged with the rear fixed block at the connecting end, and the wheel seat is fixed at the connecting end of the synchronous rod. The connecting end of the synchronous rod is arranged along the rotation axis of the synchronous rod, and the rest of the synchronous rod is arranged towards an installation seat of the synchronous rod.

Preferably, a rear end of the wheel seat is fixed with the synchronous rod, and one end, on which the universal wheel is installed, of the wheel seat rises upward relative to a connection point between the wheel seat and the synchronous rod.

Preferably, both ends of the synchronous rod are respectively installed on the rear side fixed block through bearing bushes.

The present disclosure also provides an installation structure of the synchronous universal wheel mechanism, including a frame and a driving wheel installation seat. The driving wheel installation seat is fixed on the frame, and a driving wheel is installed on the driving wheel installation seat. The installation structure includes a synchronous universal wheel mechanism according to any one of the above, an installation groove with a backward opening is formed in the rear side of the frame, and the synchronous universal wheel mechanism is installed in the installation groove from the opening.

Due to the adoption of the above technical schemes, the present disclosure has the following beneficial effects.

Firstly, the wheel seat, the synchronous rod and the rear side fixed block are of an integrated structure, so that modular installation is realized. During installation, the integrated structure can be assembled in the frame from the rear side, so that the installation structure is simple.

Secondly, on one hand, the synchronous rod is used for being rigidly connected with the wheel seats at both ends to realize synchronous actions of the universal wheels on both sides of the driving wheel. On the other hand, as a rotating shaft of the wheel seat, the synchronous rod does not need to be additionally provided with a wheel seat to connect the structure relative to the rotation of the frame, so that the structure is simple.

Thirdly, as a buffer, the pressure spring can quickly response, quickly rebound and expand in a large scale, and is suitable for application scenarios with frequent vibration.

### BRIEF DESCRIPTION OF THE DRAWINGS

FIG. 1 is a top view of a synchronous universal wheel mechanism (a pressure spring and a pressure spring installation plate are not shown).
FIG. 2 is a schematic diagram of assembly positions of a synchronous universal wheel mechanism and a driving wheel installation seat.
FIG. 3 is a schematic diagram at another angle in FIG. 2.

Reference signs in the attached figures:
1, wheel seat; 2, synchronous rod; 3, rear side fixed block; 31, bearing bush; 4, universal wheel; 5, driving wheel installation seat; 6, pressure spring; and 7, pressure spring installation plate.

### DETAILED DESCRIPTION OF THE EMBODIMENTS

Embodiments in the present disclosure are described in detail below.

### Embodiment I

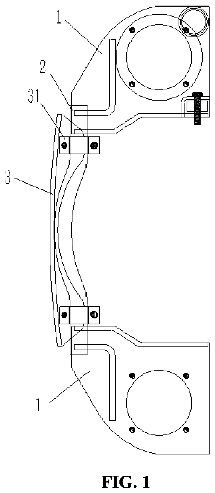

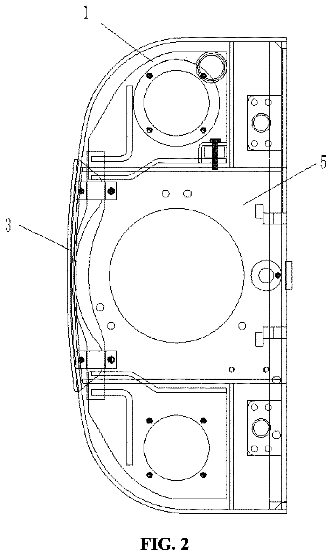

The embodiment provides a synchronous universal wheel mechanism. As shown in FIG. 1 to FIG. 3, the synchronous universal wheel mechanism includes a pair of symmetrically arranged wheel seats 1 and a synchronous rod 2 connected with the pair of wheel seats 1. The synchronous rod 2 and the wheel seats 1 are of a rigid integrated structure. A universal wheel 4 is installed at the bottom of the wheel seat 1. An installation space for installing a driving wheel installation seat 5 is formed between the wheel seats 1. The synchronous rod 2 and a rear side fixed block 3 are located on the rear side of the installation space. The synchronous rod 2 is installed on the rear side fixed block 3 and can rotate up and down relative to the rear side fixed block 3. Installation holes for fixing the driving wheel installation seat 5 or a frame are formed in the rear side fixed block 3. The synchronous universal wheel mechanism also includes a pressure spring 6. The pressure spring 6 is located on an up-and-down rotation path of the wheel seat 1 after the wheel seat 1 is installed in place, and the expansion axis of the pressure spring 6 is perpendicular to the rotation axis of the synchronous rod 2.

According to the above arrangement, the synchronous rod 2, the wheel seat 1 and the rear side fixed block 3 form an installation module independent of the driving wheel seat 1, and the rigid integrated structure of the synchronous wheel and the wheel seat 1 can rotate up and down relative to the rear side fixed block 3. The rear side fixed block 3 is used for connecting the synchronous universal wheel mechanism with other parts of the frame, so that the integrated structure can be assembled into the frame from the rear side during installation, the modular installation of the frame is realized, the installation steps are simplified, and the installation efficiency is improved.

The pressure spring 6 is arranged on an up-and-down floating path of the wheel seat 1, and the expansion axis of the pressure spring 6 is perpendicular to the rotation axis of the synchronous rod 2. Through the arrangement, the vibration of the universal wheel 4 on the driving road surface can be buffered through the pressure spring 6. The pressure spring 6 has the advantages of quick response, quick rebound and large-scale expansion, and is suitable for working scenarios where the transportation vehicle vibrates frequently.

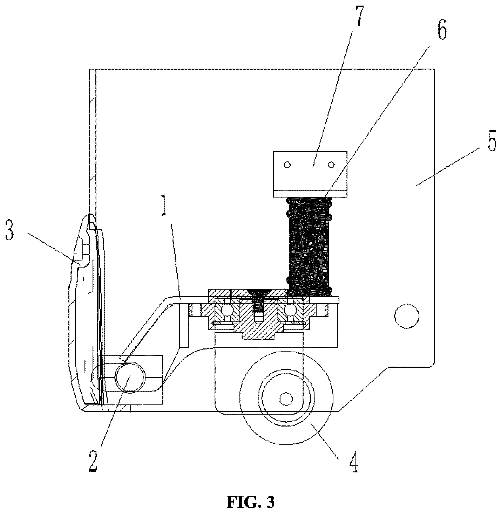

As an optional setting mode of the pressure spring 6, as shown in FIG. 3, the synchronous universal wheel mechanism includes a pressure spring installation plate 7. The pressure spring installation pate 7 is fixed on the driving wheel installation seat 5. The pressure spring installation plate 7 provides an upper limit for the pressure spring 6, and the wheel seat 1 provides a lower limit for the pressure spring 6. According to the above arrangement. The pressure spring 6 is fixed on the driving wheel installation seat 5 through the pressure spring installation plate 7. Through the arrangement, when the synchronous universal wheel mechanism is installed in the frame, the installation of the synchronous universal wheel mechanism cannot be obstructed due to the arrangement of the pressure spring 6. In another optional embodiment, the pressure spring 6 can also be arranged referring to a wheel load adjusting device in CN205131373U.

Preferably, the pressure spring installation plate 7 includes a fixed seat, the pressure spring 6 provides an upper limit through the fixed seat, and the fixed seat is fixed with an adjusting screw rod and is driven to be adjusted up and down through the adjusting screw rod. The pretightening force of the pressure spring 6 can be adjusted through the adjusting screw rod so as to adapt the requirement of transportation vehicles with different loads. As further optimization, the pressure springs 6 sleeves a guide shaft and is telescopically guided through the guide shaft. Optionally, the adjusting screw rod extends downwards as the guide shaft of the pressure spring 6.

In the embodiment, both ends of the synchronous rod 2 are respectively installed on the rear side fixed block 3 through bearing bushes 31, and the installation structure is compact. Left and right ends of the synchronous rod 2 are connecting ends of the synchronous rod 2, the synchronous rod 2 is hinged with the rear fixed block 3 at the connecting end, and the wheel seat 1 is fixed at the connecting end of the synchronous rod 2. The connecting end of the synchronous rod 2 is arranged along the rotation axis of the synchronous rod 2, and the rest of the synchronous rod 2 is arranged towards an installation seat of the synchronous rod 2. The synchronous rod 2 can be shielded by the rear side fixed block 3 integrally, and the occupied space of the synchronous rod 2 is small. Moreover, a rear end of the wheel seat 1 is fixed with the synchronous rod 2, and one end, on which the universal wheel 4 is installed, of the wheel seat 1 rises upward relative to a connection point between the wheel seat 1 and the synchronous rod 2. Through the above arrangement, the installation structure of the universal wheel 4 and the wheel seat 1 is compact, and a large up-and-down floating stroke of the wheel seat 1 can be provided in a limited range, so that the structure is compact.

### Embodiment II

The embodiment provides an installation structure of a synchronous universal wheel mechanism in the embodiment. The installation structure of the synchronous universal wheel mechanism includes a frame and a driving wheel installation seat 5. The driving wheel installation seat 5 is fixed on the frame, and a driving wheel is installed on the driving wheel installation seat 5. An installation groove with a backward opening is formed in the rear side of the frame, and the synchronous universal wheel mechanism is installed in the installation groove from the opening. In the embodiment, the structure of the frame is the same as that of a conventional frame, but the installation mode of the synchronous universal wheel mechanism is changed since the synchronous universal wheel mechanism is assembled conveniently from the rear side. During installation, first the pressure spring can be fixed on the driving wheel installation seat 5 through the installation plate of the pressure spring 6, and then the wheel seat 1, the synchronous rod 3 and the rear side fixed block 3 are integrally installed, so that modular installation can be realized, the assembly is convenient, and subsequent maintenance is facilitated.

Although the embodiments of the present disclosure have already been illustrated and described, various changes, modifications, replacements and transformations can be made by those skilled in the art under the condition of without departing from the principle and the spirit of the present disclosure, and thus the scope of the present disclosure should be restricted by claims and equivalents thereof.

## Claims

1. A synchronous universal wheel mechanism, comprising a pair of symmetrically arranged wheel seats and a synchronous rod connected with the pair of wheel seats, the synchronous rod and the wheel seats being of a rigid integrated structure, and a universal wheel being installed at the bottom of the wheel seat, wherein an installation space for installing a driving wheel installation seat is formed between the wheel seats, the synchronous rod and a rear side fixed block are located on the rear side of the installation space, the synchronous rod is installed on the rear side fixed block and can rotate up and down relative to the rear side fixed block, and installation holes for fixing the driving wheel installation seat or a frame are formed in the rear side fixed block; the synchronous universal wheel mechanism also includes a pressure spring, the pressure spring is located on an up-and-down rotation path of the wheel seat after the wheel seat is installed in place, and the expansion axis of the pressure spring is perpendicular to the rotation axis of the synchronous rod.

2. The synchronous universal wheel mechanism according to claim 1, wherein the synchronous universal wheel mechanism comprises a pressure spring installation plate, the pressure spring installation pate is fixed on the driving wheel installation seat, the pressure spring installation plate provides an upper limit for the pressure spring, and the wheel seat provides a lower limit for the pressure spring.

3. The synchronous universal wheel mechanism according to claim 2, wherein the pressure spring installation plate comprises a fixed seat, the pressure spring provides an upper limit through the fixed seat, and the fixed seat is fixed with an adjusting screw rod and is driven to be adjusted up and down through the adjusting screw rod.

4. The synchronous universal wheel mechanism according to claim 1, wherein left and right ends of the synchronous rod are connecting ends of the synchronous rod, the synchronous rod is hinged with the rear fixed block at the connecting end, and the wheel seat is fixed at the connecting end of the synchronous rod; the connecting end of the synchronous rod is arranged along the rotation axis of the synchronous rod, and the rest of the synchronous rod is arranged towards an installation seat of the synchronous rod.

5. The synchronous universal wheel mechanism according to claim 1, wherein a rear end of the wheel seat is fixed with the synchronous rod, and one end, on which the universal wheel is installed, of the wheel seat rises upward relative to a connection point between the wheel seat and the synchronous rod.

6. The synchronous universal wheel mechanism according to claim 1, wherein both ends of the synchronous rod are respectively installed on the rear side fixed block through bearing bushes.

7. An installation structure of the synchronous universal wheel mechanism, comprising a frame and a driving wheel installation seat, the driving wheel installation seat being fixed on the frame, and a driving wheel being installed on the driving wheel installation seat, wherein the installation structure comprises a synchronous universal wheel mechanism according to any one of claims 1 to 6, an installation groove with a backward opening is formed in the rear side of the frame, and the synchronous universal wheel mechanism is installed in the installation groove from the opening.
